# EUROPEAN PATENT APPLICATION

(11) **EP 4 389 792 A1**
(43) Date of publication of application: **26.06.2024**
(21) Application number: 22858137.7
(22) Date of filing: 03.06.2022
(51) Int. Cl.: C08G 14/12, C08F 290/14

(54) **RESIN, METHOD FOR PRODUCING RESIN, CURABLE RESIN COMPOSITION, AND CURED OBJECT**

(30) Priority: 18.08.2021 JP 2021133308
(71) Applicant: MITSUBISHI GAS CHEMICAL COMPANY, INC., Chiyoda-ku Tokyo 100-8324 (JP)
(72) Inventor: UOTANI Takuya, Tokyo 125-0051 (JP); AOYAGI Naoto, Tokyo 125-0051 (JP); INNAN Susumu, Tokyo 125-0051 (JP); ITOH Syouichi, Yokkaichi-shi, Mie 510-0886 (JP); OGIWARA Masashi, Kurashiki-shi, Okayama 712-8525 (JP); OKA Hiroaki, Kurashiki-shi, Okayama 712-8525 (JP)
(74) Representative: Hoffmann Eitle
(86) International application number: PCT/JP2022/022655
(87) International publication number: WO 2023/021813

(57) **Abstract**

A novel resin excellent in dielectric properties, a method for producing a resin, a curable resin composition, and a cured product thereof are provided. The resin has constituent units described in Group (1), wherein a, b, c and d each independently represent a molar ratio of the constituent unit, wherein a is a number of 1 or more, b is a number of 0 or more, c is a number of 1 or more, and d is a number of 0 or more.

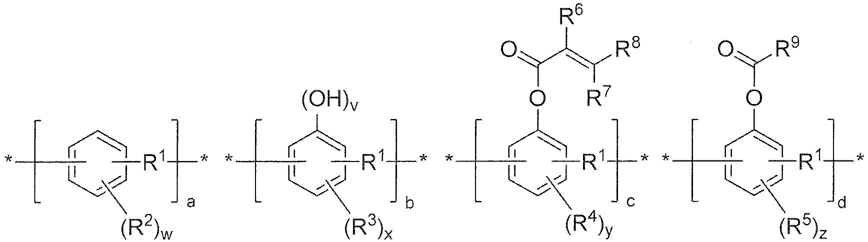

## Description

### Technical Field

The present invention relates to a novel resin, a method for producing a resin, a curable resin composition, and a cured product.

### Background Art

Due to excellent heat resistance, a resin having a vinyl group such as a vinyl compound is used for various materials. For example, ones disclosed in Patent Literature 1 are known.

On the other hand, through making use of the excellent heat resistance of the resin having a vinyl group such as a vinyl compound, a material with enhanced dielectric properties for use in electronic equipment which handles high-frequency signals has been studied. As such vinyl compounds and production methods thereof are known, for example, ones disclosed in Patent Literature 2 and Patent Literature 3 are known.

### Citation List

### Patent Literature

Patent Literature 1: Japanese Patent Laid-Open No. 2020-037651
Patent Literature 2: Japanese Patent Laid-Open No. 2015-189925
Patent Literature 3: Japanese Patent Laid-Open No. H01-108212

### Summary of Invention

Along with the recent technical innovation, a novel resin having a vinyl group excellent in dielectric properties and a production method thereof have been required.

An object of the present invention is to solve the problem, and specifically to provide a novel resin excellent in dielectric properties, a method for producing a resin, a curable resin composition, and a cured product.

### Solution to Problem

As a result of study of the present inventor to solve the problem, it has been found that a resin having a specific structure can solve the problem.

Specifically, the problem has been solved by the following means.
<1> A resin having constituent units described in Group (1): 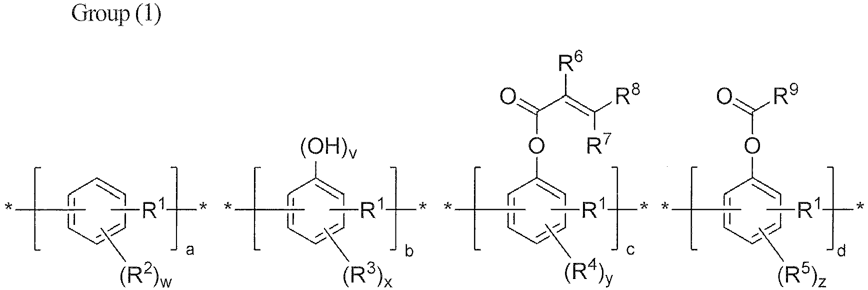 wherein R¹s each independently represent a methylene group, a methyleneoxy group, a methylene oxymethylene group or an oxymethylene group; R² represents an alkyl group having 1 to 3 carbon atoms; R³, R⁴ and R⁵ each independently represent a halogen atom, an alkyl group having 1 to 10 carbon atoms, a halogenated alkyl group having 1 to 10 carbon atoms, a hydroxyalkyl group having 1 to 10 carbon atoms, or an aryl group having 6 to 12 carbon atoms; R⁶, R⁷ and R⁸ each independently represent a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms; R⁹ represents a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms; v represents 0 or 1, w represents a number of 1 to 3, and x, y and z each independently represent a number of 0 to 3; a, b, c and d each independently represent a molar ratio of the constituent unit, wherein a is a number of 1 or more, b is a number of 0 or more, c is a number of 1 or more, and d is a number of 0 or more; R¹s may be bonded to each other to form a crosslinked structure; and * represents a position of bonding to another constituent unit or an end group.
<2> The resin according to item <1>, wherein in Group (1), R⁶ is a methyl group, and R⁷ and R⁸ are hydrogen atoms.
<3> The resin according to item <1> or <2>, wherein in Group (1), R³, R⁴ and R⁵ are each independently an alkyl group having 1 to 10 carbon atoms.
<4> The resin according to item <1> or <2>, wherein in Group (1), R³, R⁴ and R⁵ are each independently an alkyl group having 1 to 5 carbon atoms.
<5> The resin according to any one of items <1> to <4>, having a phenolic hydroxy group content of 0.5 mmol/g or less.
<6> The resin according to any one of items <1> to <5>, having a content of a group represented by the following in Group (1) of 1.0 mmol/g or more: 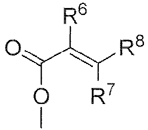 wherein R⁶ to R⁸ are as defined for R⁶ to R⁸ in Group (1).
<7> The resin according to any one of items <1> to <6>, wherein the constituent units described in Group (1) comprise at least one selected from the group consisting of constituent units described in Group (1-1), constituent units described in Group (1-2), constituent units described in Group (1-3), and constituent units described in Group (1-4): 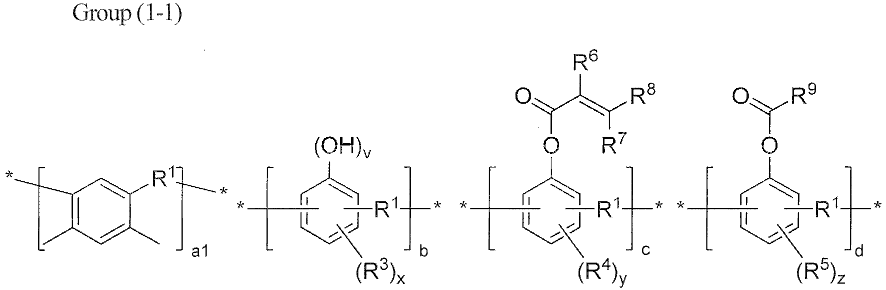 wherein R¹, R³, R⁴, R⁵, R⁶, R⁷, R⁸, R⁹, v, x, y, z, a1, b, c and d are as defined for R¹, R³, R⁴, R⁵, R⁶, R⁷, R⁸, R⁹, v, x, y, z, a, b, c and d in Group (1), respectively, and * represents a position of bonding to another constituent unit or an end group; 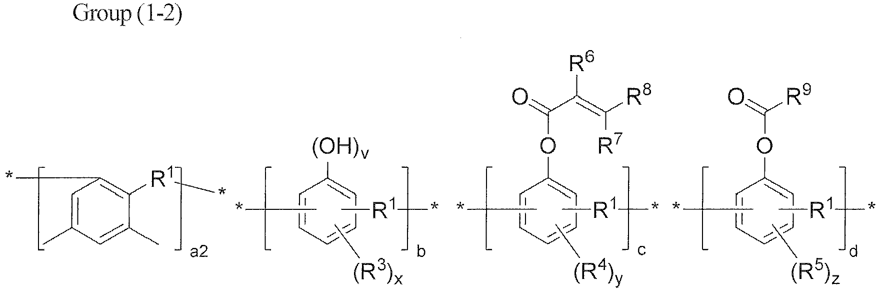 wherein R¹, R³, R⁴, R⁵, R⁶, R⁷, R⁸, R⁹, v, x, y, z, a2, b, c and d are as defined for R¹, R³, R⁴, R⁵, R⁶, R⁷, R⁸, R⁹, v, x, y, z, a, b, c and d in Group (1), respectively, and * represents a position of bonding to another constituent unit or an end group; 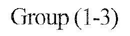 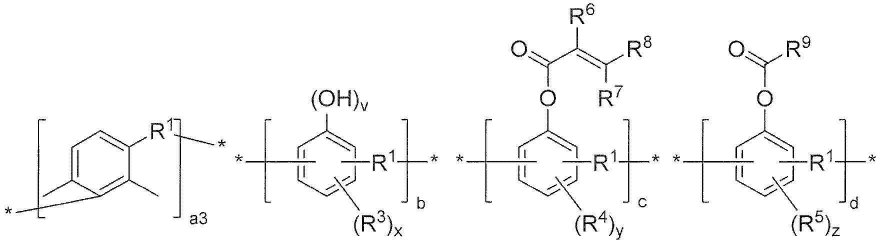 wherein R¹, R³, R⁴, R⁵, R⁶, R⁷, R⁸, R⁹. v, x, y, z, a3, b, c and d are as defined for R¹. R³, R⁴, R⁵, R⁶, R⁷, R⁸, R⁹, v, x, y, z, a, b, c and d in Group (1), respectively, and * represents a position of bonding to another constituent unit or an end group; 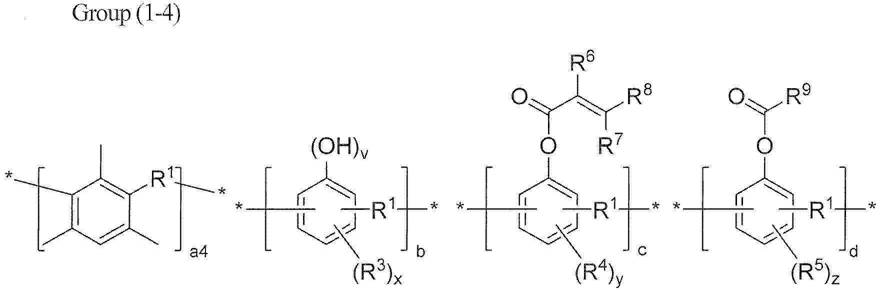 wherein R¹, R³, R⁴, R⁵, R⁶, R⁷, R⁸, R⁹, v, x, y, z, a4, b, c and d are as defined for R¹, R³, R⁴, R⁵, R⁶, R⁷, R⁸, R⁹, v, x, y, z, a, b, c and d in Group (1), respectively, and * represents a position of bonding to another constituent unit or an end group.
<8> The resin according to item <7>, wherein the constituent units described in Group (1) comprise constituent units described in Group (1-1) or Group (1-4).
<9> The resin according to any one of items <1> to <8>, having a number average molecular weight (Mn) of 500 to 6000, and a weight average molecular weight (Mw) of 500 to 15000.
<10> The resin according to any one of items <1> to <9>, wherein an end group of the resin is selected from the group consisting of a hydrogen atom, a hydroxy group and a hydroxymethyl group.
<11> A resin comprising a reaction product at least a compound represented by Formula (2) and a raw material resin having constituent units described in Group (4): 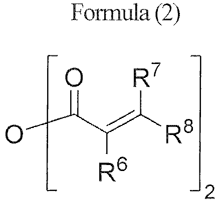 wherein R⁶, R⁷ and R⁸ each independently represent a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms; 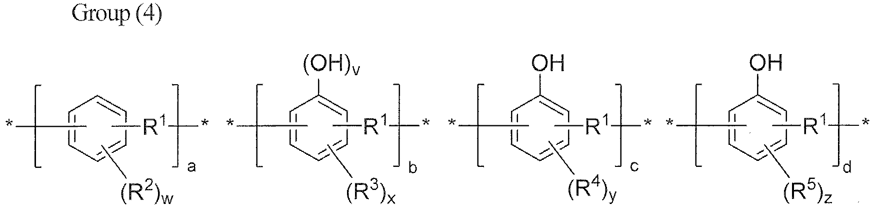 wherein R¹s each independently represent a methylene group, a methyleneoxy group, a methylene oxymethylene group or an oxymethylene group; R² represents an alkyl group having 1 to 3 carbon atoms; R³, R⁴ and R⁵ each independently represent a halogen atom, an alkyl group having 1 to 10 carbon atoms, a halogenated alkyl group having 1 to 10 carbon atoms, a hydroxyalkyl group having 1 to 10 carbon atoms, or an aryl group having 6 to 12 carbon atoms; v represents 0 or 1, w represents a number of 1 to 3, and x, y and z each independently represent a number of 0 to 3; a, b, c and d each independently represent a molar ratio of the constituent unit, wherein a is a number of 1 or more, b is a number of 0 or more, c is a number of 1 or more, and d is a number of 0 or more; R¹s may be bonded to each other to form a crosslinked structure; and * represents a position of bonding to another constituent unit or an end group.
<12> A method for producing a resin, comprising reacting at least a compound represented by Formula (2) and a raw material resin having constituent units described in Group (4) in the presence of a basic compound: 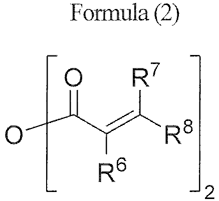 wherein R⁶, R⁷ and R⁸ each independently represent a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms; 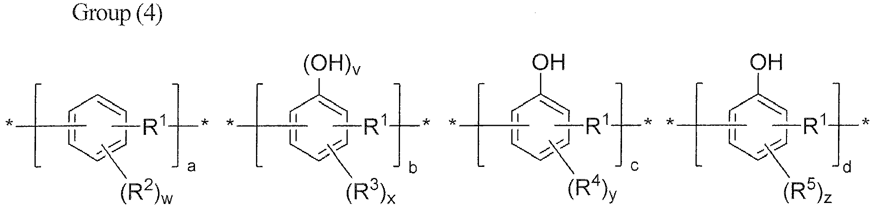 wherein R¹s each independently represent a methylene group, a methyleneoxy group, a methylene oxymethylene group or an oxymethylene group; R² represents an alkyl group having 1 to 3 carbon atoms; R³, R⁴ and R⁵ each independently represent a halogen atom, an alkyl group having 1 to 10 carbon atoms, a halogenated alkyl group having 1 to 10 carbon atoms, a hydroxyalkyl group having 1 to 10 carbon atoms, or an aryl group having 6 to 12 carbon atoms; v represents 0 or 1, w represents a number of 1 to 3, and x, y and z each independently represent a number of 0 to 3; a, b, c and d each independently represent a molar ratio of the constituent unit, wherein a is a number of 1 or more, b is a number of 0 or more, c is a number of 1 or more, and d is a number of 0 or more; R's may be bonded to each other to form a crosslinked structure; and * represents a position of bonding to another constituent unit or an end group.
<13> The method for producing a resin according to item <12>, wherein in Formula (2), R⁶ is a methyl group, and R⁷ and R⁸ are hydrogen atoms.
<14> The method for producing a resin according to item <12> or <13>, wherein in Group (4), R³, R⁴ and R⁵ are each independently an alkyl group having 1 to 10 carbon atoms.
<15> The method for producing a resin according to item <12> or <13>, wherein in Group (4), R³, R⁴ and R⁵ are each independently an alkyl group having 1 to 5 carbon atoms.
<16> The method for producing a resin according to any one of items <12> to <15>, wherein the raw material resin has a hydroxyl value of 100 to 600 g/mol.
<17> The method for producing a resin according to any one of items <12> to <16>, wherein the constituent units described in Group (4) comprise at least one selected from the group consisting of constituent units described in Group (4-1), constituent units described in Group (4-2), constituent units described in Group (4-3), and constituent units described in Group (4-4): 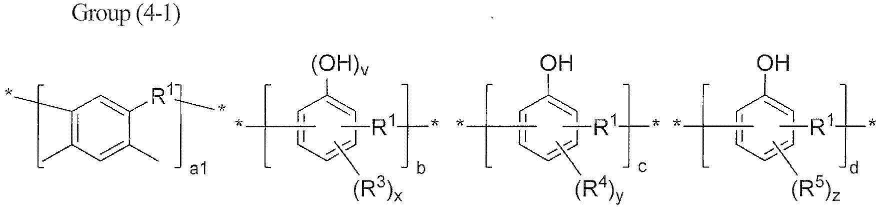 wherein R¹, R³, R⁴, R⁵, v, x, y, z, a1, b, c and d are as defined for R¹, R³, R⁴, R⁵, v, x, y, z, a, b, c and d in Group (4), respectively, and * represents a position of bonding to another constituent unit or an end group; 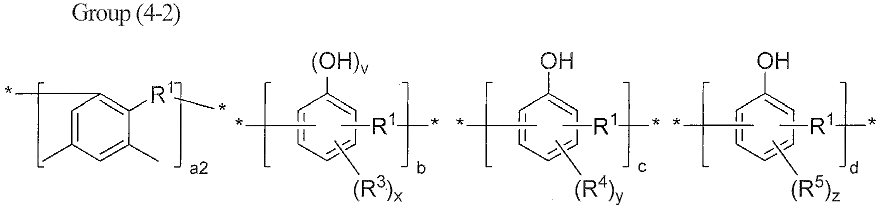 wherein R¹, R³, R⁴, R⁵, v, x, y, z, a2, b, c and d are as defined for R¹, R³, R⁴, R⁵, v, x, y, z, a, b, c and d in Group (4), respectively, and * represents a position of bonding to another constituent unit or an end group; 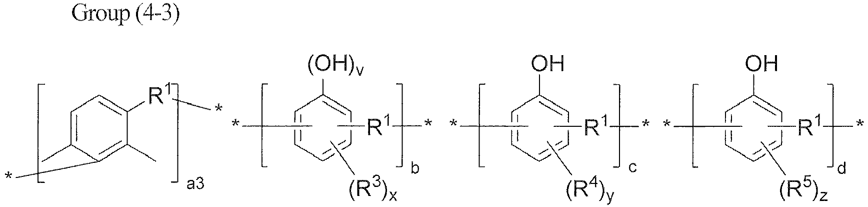 wherein R¹, R³, R⁴, R⁵, v, x, y, z, a3, b, c and d are as defined for R¹, R³, R⁴, R⁵, v, x, y, z, a, b, c and d in Group (4), respectively, and * represents a position of bonding to another constituent unit or an end group; 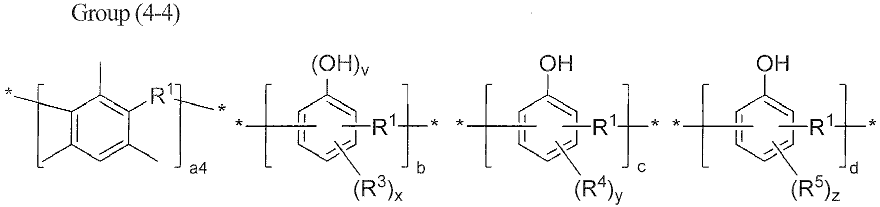 wherein R¹, R³, R⁴, R⁵, v, x, y, z, a4, b, c and d are as defined for R¹, R³, R⁴, R⁵, v, x, y, z, a, b, c and d in Group (4), respectively, and * represents a position of bonding to another constituent unit or an end group.
<18> The method for producing a resin according to item <17>, wherein the constituent units described in Group (4) comprise constituent units described in Group (4-1), or constituent units described in Group (4-4).
< 19> The method for producing a resin according to any one of items <12> to <18>, wherein the raw material resin having the constituent units described in Group (4) has a number average molecular weight (Mn) of 400 to 4000, and a weight average molecular weight (Mw) of 400 to 16000.
<20> The method for producing a resin according to any one of items <12> to <19>, wherein an end group of the raw material resin having the constituent units described in Group (4) is selected from the group consisting of a hydrogen atom, a hydroxy group and a hydroxymethyl group.
<21 > The method for producing a resin according to any one of items <12> to <20>, wherein the basic compound comprises at least one selected from the group consisting of potassium carbonate, rubidium carbonate and cesium carbonate.
<22> The method for producing a resin according to any one of items <12> to <21 >, wherein the resin to be produced is the resin according to any one of items <1> to <11>.
<23> A curable resin composition comprising the resin according to any one of items <1> to <11>.
<24> The curable resin composition according to item <23>, further comprising a thermosetting compound other than the resin according to any one of items <1> to <11>.
<25> The curable resin composition according to item <23> or <24>, wherein the thermosetting compound comprises at least one selected from the group consisting of a compound having a carbon-carbon unsaturated bond group other than the resin according to any one of items <1> to <11>, and an epoxy resin.
<26> A cured product of the curable resin composition according to any one of items <23> to <25>.

### Advantageous Effects of Invention

According to the present invention, a novel resin excellent in dielectric properties, a method for producing a resin, a curable resin composition, and a cured product can be provided.

### Description of Embodiments

The embodiment of the present invention (hereinafter, simply referred to as "present embodiment") is described in detail as follows. The following present embodiment is illustrative, and the present invention is not limited to the present embodiment only.

In the present specification, "to" is used to include the numerical values described before and after thereof as a lower limit value and an upper limit value, respectively.

In the present specification, physical property values and characteristic values are at 23°C, unless otherwise specified.

In the present specification, notations of groups (atomic groups) without description of substituted or unsubstituted include groups (atomic groups) having no substituent and groups (atomic groups) having a substituent. For example, an "alkyl group" includes not only an alkyl group having no substituent (unsubstituted allcyl group) but also an alkyl group having a substituent (substituted alkyl group). In the present specification, in the case of a notation without description of substituted or unsubstituted, unsubstituted is preferred.

In the case where a standard shown in the present specification has a different measurement method or the like depending on the year, the method or the like is based on a standard as of January 1, 2021.

The resin of the present embodiment has constituent units described in Group (1). The cured product of such a resin is excellent in dielectric properties. Further, a resin excellent in heat resistance can be obtained. In particular, a resin including the third constituent unit from the left in Group (1) as the constituent unit containing a vinyl group can be industrially produced at a low cost. Further, purification of the resin after synthesis can be performed using water, being industrially advantageous: 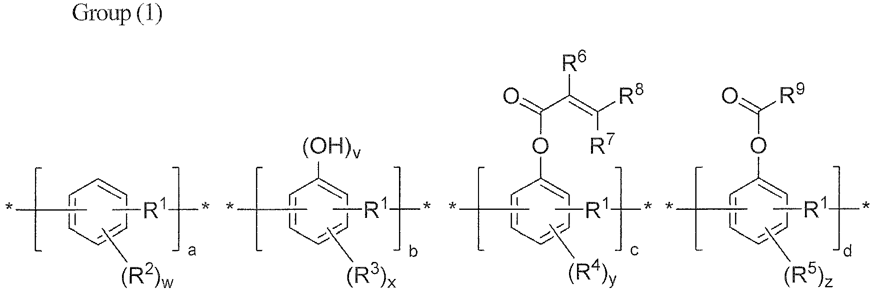 wherein R's each independently represent a methylene group, a methyleneoxy group, a methylene oxymethylene group or an oxymethylene group; R² represents an alkyl group having 1 to 3 carbon atoms; R³, R⁴ and R⁵ each independently represent a halogen atom, an alkyl group having 1 to 10 carbon atoms, a halogenated alkyl group having 1 to 10 carbon atoms, a hydroxyalkyl group having 1 to 10 carbon atoms, or an aryl group having 6 to 12 carbon atoms; R⁶, R⁷ and R⁸ each independently represent a hydrogen atom, a halogen atom, an alkyd group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms; R⁹ represents a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms; v represents 0 or 1, w represents a number of 1 to 3, and x, y and z each independently represent a number of 0 to 3; a, b, c and d each independently represent a molar ratio of the constituent unit, wherein a is a number of 1 or more, b is a number of 0 or more, c is a number of 1 or more, and d is a number of 0 or more; R¹s may be bonded to each other to form a crosslinked structure; and * represents a position of bonding to another constituent unit or an end group.

In Group (1), R's each independently represent a methylene group, a methyleneoxy group, a methylene oxymethylene group or an oxymethylene group. A methylene group and a methylene oxymethylene group are preferred, and a methylene group is more preferred. R¹s may be bonded to each other to form a crosslinked structure. Examples of the structure in which R¹s are crosslinked include the following structure:

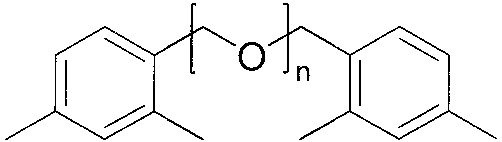

It is preferable that R¹s form no crosslinked structure. Here, n is a number of 1 or more, usually a number of 1 to 10.

R² represents an alkyl group having 1 to 3 carbons, being preferably a methyl group or an ethyl group, and more preferably a methyl group.

R³, R⁴ and R⁵ each independently represent a halogen atom, an alkyl group having 1 to 10 carbon atoms, a halogenated alkyl group having 1 to 10 carbon atoms, a hydroxyalkyl group having 1 to 10 carbon atoms, or an aryl group having 6 to 12 carbon atoms. R³, R⁴ and R⁵ are each independently preferably an alkyl group having 1 to 10 carbon atoms, and more preferably an alkyl group having 1 to 5 carbon atoms.

The halogen atom as R³ to R⁵ is preferably a fluorine atom or a chlorine atom.

The alkyl group as R³ to R⁵ is more preferably an alkyl group having 1 to 5 carbon atoms, more preferably a methyl group, an ethyl group, an i-propyl group, an n-propyl group, an n-butyl group or a t-butyl group, and still more preferably a t-butyl group.

The halogenated alkyl group having 1 to 10 carbon atoms as R³ to R⁵ is more preferably an alkyl group having 1 to 5 carbon atoms substituted with a fluorine atom or a chlorine atom, and still more preferably a fluoromethyl group, a chloromethyl group, a fluoroethyl group or a chloroethyl group.

The hydroxyalkyl group having 1 to 10 carbon atoms as R³ to R⁵ is more preferably a hydroxyalkyl group having 1 to 5 carbon atoms, and still more preferably a hydroxymethyl group or a hydroxyethyl group.

The aryl group having 6 to 12 carbon atoms as R³ to R⁵ is preferably a phenyl group.

R⁶, R⁷ and R⁸ each independently represent a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms. R⁶, R⁷ and R⁸ are each independently preferably a hydrogen atom, a halogen atom (preferably a chlorine atom or a fluorine atom) or a methyl group. More preferably, R⁶ is a methyl group, R⁷ and R⁸ are hydrogen atoms.

R⁹ represents a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms. R⁹s are each independently preferably an alkyl group having 1 to 10 carbon atoms or an aryl group having 6 to 12 carbon atoms, and more preferably a methyl group or a phenyl group.

Here, v represents 0 or 1, and both of a constituent unit with v equal to 0 and a constituent unit with v equal to 1 may be included. It is preferable that at least a constituent unit with v equal to 0 be included. Further, an aspect may include at least a constituent unit with v equal to 1.

Here, w represents a number of 1 to 3, preferably 2 or more and 3 or less.

Here, x, y and z each independently represent a number of 0 to 3, preferably 1 or more and 2 or less, and more preferably 1.

In Group (1), it is preferable that R¹ be a methylene group, R² be a methyl group, R³ to R⁵ be each independently a t-butyl group, R⁶ be a methyl group, R⁷ and R⁸ be hydrogen atoms, R⁹ be a methyl group or a phenyl group, w be 2 or 3, x be 1 or 2, and y and z be 1 or 2.

Here, a, b, c and d each independently represent a molar ratio of the constituent unit. Here, a is a number of 1 or more, b is a number of 0 or more, c is a number of 1 or more, and d is a number of 0 or more. The molar ratio b:a is preferably 1:0.8 or more, and more preferably 1:3.5 or more. The upper limit of molar ratio b:a is not particularly specified, and may be 1:100 or less, with b equal to 0 being ideal. Further, the molar ratio (c+d): a is preferably 1 :0.05 to 7, more preferably 1:0.4 to 3. Further, the molar ratio b:(c+d) is preferably 1:1.5 or more, more preferably 1:3 or more. The upper limit of the molar ratio b:(c+d) may be 1:100 or less, though not particularly specified. The molar ratio d:c is preferably 1:0.25 or more, more preferably 1:0.67 or more. The upper limit of molar ratio d:c is not particularly specified, and may be 1:100 or less, with d equal to 0 being ideal.

The sum of a, b, c and d in molar ratio based on all the constituent units in the present embodiment of 100 is preferably 90 or more, more preferably 95 or more, and it is still more preferable that all the constituent units other than the end group account for 100.

The constituent units described in Group (1) comprise preferably at least one selected from the group consisting of constituent units described in Group (1-1), constituent units described in Group (1-2), constituent units described in Group (1-3), and constituent units described in Group (1-4), and more preferably at least constituent units described in Group (1-1), or constituent units described in Group (1-4).

The resin of the present embodiment preferably comprises a reaction product at least a compound represented by Formula (2) and a raw material resin having constituent units described in Group (4). Further, the resin of the present embodiment may be a reaction product between at least one of the compound represented by Formula (2) and the compound represented by Formula (3) and a raw material resin having constituent units described in Group (4).

Typical examples of the raw material resin having constituent units described in Group (4) include a xylene resin which is an inexpensive resin synthesizable from xylene and formaldehyde and a mesitylene resin which is an inexpensive resin synthesizable from mesitylene and formaldehyde. In the case where the resin of the present embodiment is obtained from these raw material resins, a resin comprising at least one of the constituent units described in Group (1-1), the constituent units described in Group (1-2), the constituent units described in Group (1-3), and the constituent units described in Group (1-4) can be obtained. In particular, in the case of using a xylene resin, a resin comprising constituent units described in Group (1-1) is preferentially obtained. Also, in the case of using a mesitylene resin, a resin comprising constituent units described in Group (1-4) is preferentially obtained. The resin of the present embodiment allows to have a higher curing initiation temperature by containing at least one of the constituent units described in Group (1-4) (e.g., mesitylene resin).

In other words, the resin of the present embodiment can be an industrially inexpensive, easily manufacturable and immediately effective by containing at least one of the constituent units described in Group (1-1), the constituent units described in Group (1-2), the constituent units described in Group (1-3), and the constituent units described in Group (1-4). 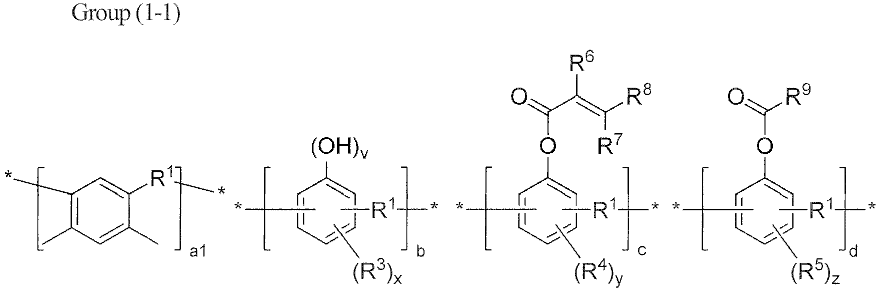 wherein R¹, R³, R⁴, R⁵, R⁶, R⁷, R⁸, R⁹, v, x, y, z, a1, b, c and d are as defined for R¹, R³, R⁴, R⁵, R⁶, R⁷, R⁸, R⁹, v, x, y, z, a, b, c and d in Group (1), respectively, and * represents a position of bonding to another constituent unit or an end group; 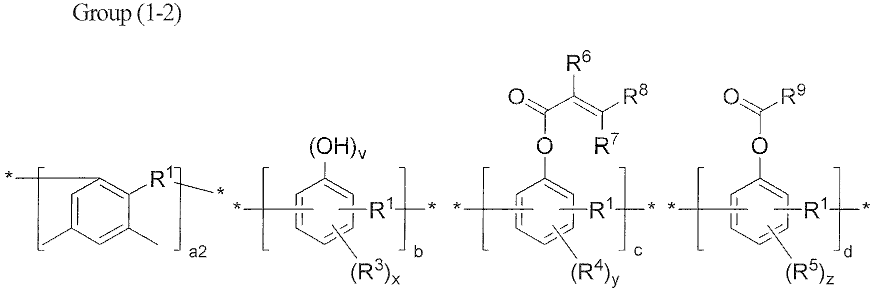 wherein R¹, R³, R⁴, R⁵, R⁶, R⁷, R⁸, R⁹, v, x, y, z, a2, b, c and d are as defined for R¹, R³, R⁴, R⁵, R⁶, R⁷, R⁸, R⁹, v, x, y, z, a, b, c and d in Group (1), respectively, and * represents a position of bonding to another constituent unit or an end group; 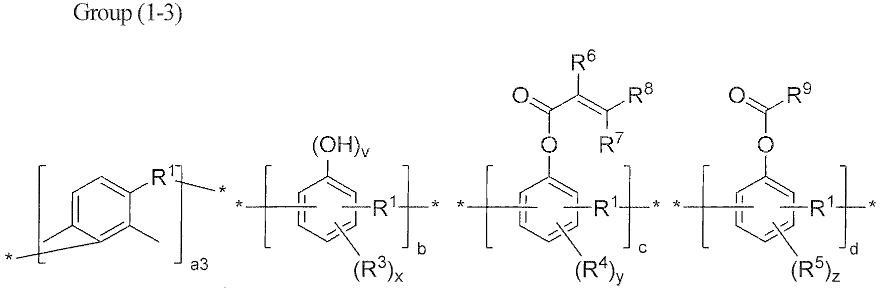 wherein R¹, R³, R⁴, R⁵, R⁶, R⁷, R⁸, R⁹, v, x, y, z, a3, b, c and d are as defined for R¹, R³, R⁴, R⁵, R⁶, R⁷, R⁸, R⁹, v, x, y, z, a, b, c and d in Group (1), respectively, and * represents a position of bonding to another constituent unit or an end group; 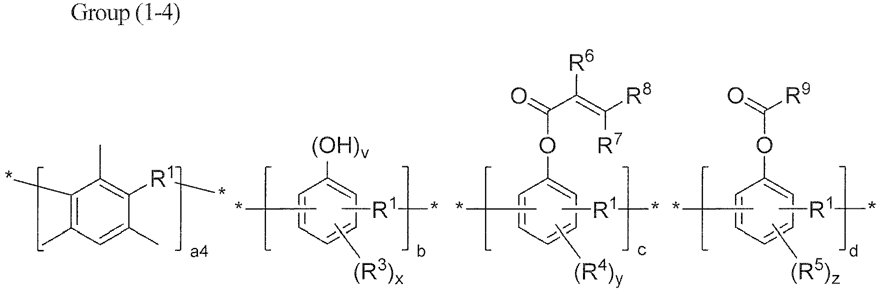 wherein R¹, R³, R⁴, R⁵, R⁶, R⁷, R⁸, R⁹, v, x, y, z, a4, b, c and d are as defined for R¹, R³, R⁴, R⁵, R⁶, R⁷, R⁸, R⁹, v, x, y, z, a, b, c and d in Group (1), respectively, and * represents a position of bonding to another constituent unit or an end group.

The resin of the present embodiment may contain only one kind or two or more kinds of each of the constituent units in Group (1). In the case where two or more kinds are contained, the total amount is in the range.

The resin of the present embodiment may contain a constituent unit other than the constituent units represented in Group (1).

In the resin of the present embodiment, the constituent units shown in Group (1) may be randomly polymerized or block-polymerized.

In Group (1), * represents a position of bonding to another constituent unit or an end group. The end group is preferably selected from the group consisting of a hydrogen atom, a hydroxy group and a hydroxymethyl group, more preferably a hydrogen atom or a hydroxy group, and still more preferably a hydrogen atom.

The resin of the present embodiment has a phenolic hydroxy group content of preferably 0.5 mmol/g or less, more preferably 0.3 mmol/g or less, still more preferably 0.2 mmol/g or less, even more preferably 0.1 mmol/g or less, and furthermore preferably 0.05 mmol/g or less. With a content equal to or less than the upper limit value, a resin more excellent in low dielectric properties can be obtained. The lower limit value of the phenolic hydroxy group content is preferably 0 mmol/g, practically more than 0 mmol/g.

Further, the resin of the present embodiment has a content of the group represented by the following in Group (1) of preferably 1.0 mmol/g or more, more preferably 1.1 mmol/g or more, still more preferably 1.2 mmol/g or more, even more preferably 1.5 mmol/g or more, and furthermore preferably 2.0 mmol/g or more. With a content equal to or more than the lower limit value, a resin more excellent in curability can be obtained. Further, ones more excellent in heat resistance and dielectric properties tend to be obtained. The upper limit value is not particularly specified and may be, for example, 5.0 mmol/g or less. 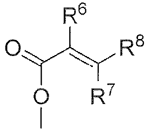 wherein R⁶ to R⁸ in the group are as defined for R⁶ to R⁸ in Group (1).

The resin of the present embodiment has a weight average molecular weight (Mw) of preferably 500 or more, more preferably 1000 or more, still more preferably 3000 or more, even more preferably 4000 or more, and furthermore preferably 7000 or more. With a weight average molecular weight (Mw) equal to or more than the lower limit value, the resin has improved toughness and flexibility, so that the cracks during forming and occurrence of cracks in a formed article can be more effectively prevented. Further, the resin of the present embodiment has a weight average molecular weight (Mw) of preferably 30000 or less, more preferably 20000 or less, still more preferably 18000 or less, even more preferably 16000 or less, which may be 15000 or less. With a weight average molecular weight (Mw) equal to or less than the upper limit value, the resin has improved solubility in a solvent and a reduced melt viscosity, so that handling properties of the resin tend to be more improved.

The resin of the present embodiment has a number average molecular weight (Mn) of preferably 500 or more, more preferably 800 or more, still more preferably 1000 or more, even more preferably 1200 or more, and furthermore preferably 1700 or more. With a number average molecular weight (Mn) equal to or more than the lower limit value, the resin has improved toughness and flexibility, so that the cracks during forming and occurrence of cracks in a formed article can be more effectively prevented. Further, the resin of the present embodiment has a number average molecular weight (Mn) of preferably 10000 or less, more preferably 8000 or less, still more preferably 7000 or less, even more preferably 6000 or less, which may be 4500 or less. With a number average molecular weight (Mn) equal to or less than the upper limit value, the resin has improved solubility in a solvent and a reduced melt viscosity, so that handling properties of the resin tend to be more improved.

The weight average molecular weight and the number average molecular weight are measured by the methods described in the following Examples.

A method for producing a resin of the present embodiment comprises reacting at least a compound represented by Formula (2) and a raw material resin having constituent units described in Group (4) in the presence of a basic compound. By such a production method, a resin excellent in dielectric properties can be obtained. Further, a resin excellent in heat resistance can be obtained. Alternatively, a compound represented by Formula (3) may be also reacted. 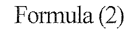 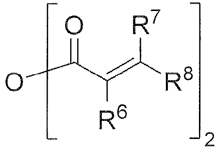 wherein R⁶, R⁷ and R⁸ each independently represent a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms; 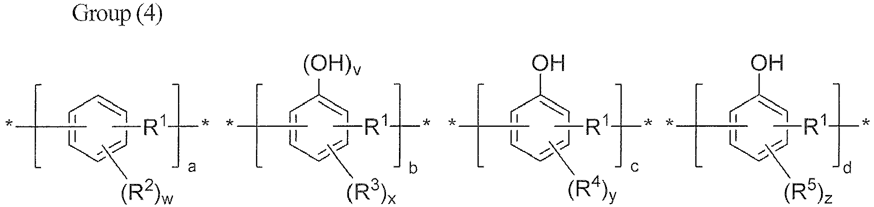 wherein R¹s each independently represent a methylene group, a methyleneoxy group, a methylene oxymethylene group or an oxymethylene group; R² represents an alkyl group having 1 to 3 carbon atoms; R³, R⁴ and R⁵ each independently represent a halogen atom, an alkyl group having 1 to 10 carbon atoms, a halogenated alkyl group having 1 to 10 carbon atoms, a hydroxyalkyl group having 1 to 10 carbon atoms, or an aryl group having 6 to 12 carbon atoms; v represents 0 or 1, w represents a number of 1 to 3, and x, y and z each independently represent a number of 0 to 3; a, b, c and d each independently represent a molar ratio of the constituent unit, wherein a is a number of 1 or more, b is a number of 0 or more, c is a number of 1 or more, and d is a number of 0 or more; R¹s may be bonded to each other to form a crosslinked structure; and * represents a position of bonding to another constituent unit or an end group. 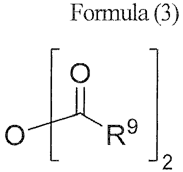 wherein R⁹ represents a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms.

First, the details of Group (4) are described.

In Group (4), R¹, R², R³, R⁴, R⁵, v, w, x, y, z, a, b, c and d are as defined for R¹, R², R³, v, w, x, y, z, a, b, and c in Group (1), respectively, and the preferred ranges are the same. The end group in Group (4) is the same as the end group in Group (1).

The constituent units described in Group (4) comprise preferably at least one selected from the group consisting of constituent units described in Group (4-1), constituent units described in Group (4-2), constituent units described in Group (4-3), and constituent units described in Group (4-4), and more preferably constituent units described in Group (4-1), or constituent units described in Group (4-4). By using a raw material resin containing at least one selected from the group consisting of constituent units described in Group (4-1), constituent units described in Group (4-2), constituent units described in Group (4-3), and constituent units described in Group (4-4), a resin having constituent units described in Group (1) can be produced at a lower cost: 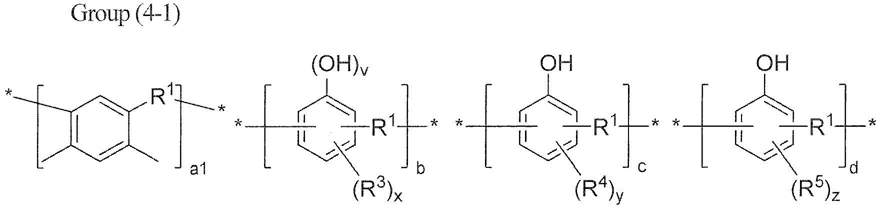 wherein R¹, R³, R⁴, R⁵, v, x, y, z, a1, b, c and d are as defined for R¹, R³, R⁴, R⁵, v, x, y, z, a, b, c and d in Group (4), respectively, and * represents a position of bonding to another constituent unit or an end group; 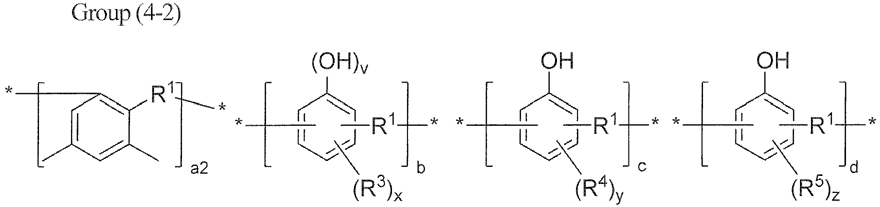 wherein R¹, R³, R⁴, R⁵, v, x, y, z, a2, b, c and d are as defined for R¹, R³, R⁴, R⁵, v, x, y, z, a, b, c and d in Group (4), respectively, and * represents a position of bonding to another constituent unit or an end group; 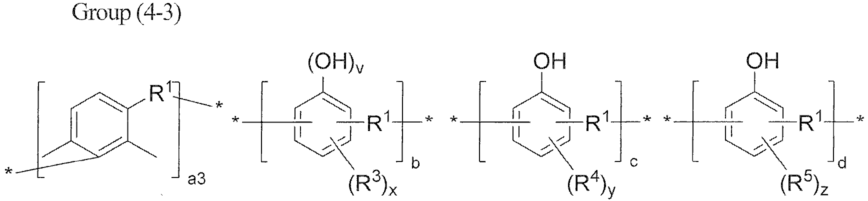 wherein R¹, R³, R⁴, R⁵, v, x, y, z, a3, b, c and d are as defined for R¹, R³, R⁴, R⁵, v, x, y, z, a, b, c and d in Group (4), respectively, and * represents a position of bonding to another constituent unit or an end group; 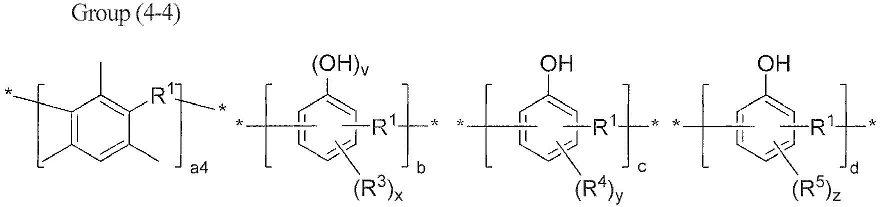 wherein R¹, R³, R⁴, R⁵, v, x, y, z, a4, b, c and d are as defined for R¹, R³, R⁴, R⁵, v, x, y, z, a, b, c and d in Group (4), respectively, and * represents a position of bonding to another constituent unit or an end group.

The raw material resin having constituent units described in Group (4) has a weight average molecular weight (Mw) of preferably 400 or more, more preferably 600 or more, still more preferably 800 or more, even more preferably 1000 or more, furthermore preferably 2000 or more, furthermore preferably 3000 or more, which may be 5000 or more. With a weight average molecular weight (Mw) equal to or more than the lower limit value, the resin has improved toughness and flexibility, so that the cracks during forming and occurrence of cracks in a formed article can be more effectively prevented. Further, the raw material resin having constituent units described in Group (4) has a weight average molecular weight (Mw) of preferably 30000 or less, more preferably 20000 or less, still more preferably 16000 or less, even more preferably 12000 or less, and furthermore preferably 10000 or less. With a weight average molecular weight (Mw) equal to or less than the upper limit value, the resin has improved solubility in a solvent and a reduced melt viscosity, so that handling properties of the resin tend to be more improved.

The raw material resin having the constituent units described in Group (4) has a number average molecular weight (Mn) of preferably 400 or more, more preferably 600 or more, still more preferably 800 or more, which may be 1000 or more. With a number average molecular weight (Mn) equal to or more than the lower limit value, the resin has improved toughness and flexibility, so that the cracks during forming and occurrence of cracks in a formed article can be more effectively prevented. Further, the raw material resin having the constituent units described in Group (4) has a number average molecular weight (Mn) of preferably 5000 or less, more preferably 4000 or less, still more preferably 3500 or less, even more preferably 2500 or less. With a number average molecular weight (Mn) equal to or less than the upper limit value, the resin has improved solubility in a solvent and a reduced melt viscosity, so that handling properties of the resin tend to be more improved.

The weight average molecular weight and the number average molecular weight are measured by the methods described in the following Examples.

The raw material resin having the constituent units described in Group (4) preferably has a hydroxyl value of 100 g/mol or more, more preferably 130 g/mol or more, still more preferably 160 g/mol or more, even more preferably 190 g/mol or more, and furthermore preferably 210 g/mol or more. With a hydroxyl value equal to or more than the lower limit value, the amount of hydroxy groups to be reacted with the compound represented by Formula (2) is not beyond necessity, so that the dielectric properties tend to be more improved. Further, the raw material resin having the constituent units described in Group (4) preferably has a hydroxyl value of 600 g/mol or less, more preferably 550 g/mol or less, still more preferably 500 g/mol or less, even more preferably 450 g/mol or more, furthermore preferably 400 g/mol or less, and may be 360 g/mol or less. With a hydroxyl value equal to or less than the upper limit value, a resin excellent in heat resistance and dielectric properties tends to be obtained.

In other words, introduction of a structure derived from the compound represented by Formula (2) allows the resulting resin to have a higher Tg, with dielectric properties tending to be poor. Accordingly, it is desirable that the amount of hydroxy group of the raw material is adjusted as described above.

The equivalent of hydroxy group is measured according to the description in Examples.

Next, the details of Formula (2) are described. 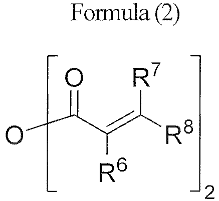 wherein R⁶, R⁷ and R⁸ each independently represent a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms.

In Formula (2), R⁶, R⁷ and R⁸ are as defined for R⁶, R⁷ and R⁸ in Group (1), respectively, and the preferred ranges are the same.

In the method for producing a resin of the present embodiment, as each of the raw material resins having the constituent units described in Group (4) and the compound represented by Formula (2), only one type may be used or two or more types may be used.

In the method for producing a resin of the present embodiment, the molar ratio between the phenolic hydroxy group of the raw material resin having the constituent units described in Group (4) and the compound represented by Formula (2), which are to be added to the reaction system, is preferably 1:1.3 to 0.4, more preferably 1:1.2 to 0.5.

In the method for producing a resin of the present embodiment, at least a compound represented by Formula (2) and a raw material resin having constituent units described in Group (4) are reacted in the presence of a basic compound. Use of the basic compound accelerates the reaction between the phenolic hydroxy group of the raw material resin having the constituent units described in Group (4) and the compound represented by the Formula (2).

It is preferable that the basic compound be at least one selected from the group consisting of potassium carbonate, rubidium carbonate and cesium carbonate. Use of these basic compounds as a catalyst effectively accelerates the reaction between the raw material resin having the constituent units described in Group (4) and the compound represented by Formula (2), and allows the yield of the resulting compound to tend to be higher.

In the present embodiment, among potassium carbonate, rubidium carbonate and cesium carbonate, potassium carbonate and cesium carbonate are preferred, and potassium carbonate is more preferred.

The form of potassium carbonate, rubidium carbonate or cesium carbonate is preferably powder, though not particularly specified. As the form of potassium carbonate, rubidium carbonate or cesium carbonate, fine powder (average particle size: approximately 10 to 200 µm) is preferred. Use of ones in powder form allows the specific surface area to increase, so that the reactivity can be enhanced.

In the production method of the present embodiment, the amount of the basic compound used per 1 mol of the hydroxy group of the raw material resin having the constituent units described in Group (4) is preferably 1.0 mol (mol/mol-OH) or more, more preferably 2.5 mol or more, and preferably 10.0 mol or less, more preferably 7.0 mol or less. With the amount used equal to or more than the lower limit value, the reactivity between the hydroxy group of the raw material resin having the constituent units described in Group (4) and the compound represented by Formula (2) tends to be more improved. With the amount used equal to or less than the upper limit value, the reduction effect of the production cost tends to be more improved.

In the production method of the present embodiment, only one type of the basic compounds may be used, or two or more types may be used. In the case where two or more are used, it is preferable that the total amount be in the range.

In the method for producing a resin of the present embodiment, a compound represented by Formula (3) may be also reacted together with the compound represented by Formula (2) and the raw material resin having the constituent units described in Group (4). The reaction with the compound represented by Formula (3) causes a reaction with the phenolic hydroxy group in the resin left unreacted with the compound represented by Formula (2) so as to reduce the hydroxyl value in the resulting resin, so that a resin excellent in dielectric properties can be obtained: 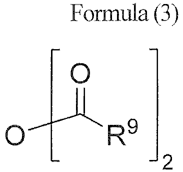 wherein R⁹ represents a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms.

In Formula (3), R⁹ is as defined for R⁹ in Group (1), and the preferred ranges are also the same.

In the production method of the present embodiment, the reaction between the raw material resin having the constituent units described in Group (4) and the compound represented by Formula (2) is performed preferably at 40 to 110°C, more preferably at 50 to 90°C.

In the production method of the present embodiment, in the reaction between the raw material resin having the constituent units described in Group (4) and the compound represented by Formula (2), it is preferable that a solvent be used.

The solvent is used without particular limitations. An aprotic solvent is preferred, and at least one of an aromatic hydrocarbon solvent and an ether solvent is preferred. Use of an aprotic solvent allows the action on O⁻ derived from the phenolic hydroxy group to tend to proceed effectively.

In the production method of the present embodiment, it is preferable that the resin obtained after the reaction between the raw material resin having the constituent units described in Group (4) and the compound represented by Formula (2) be separated and purified. The separation and purification are performed in accordance with a conventional method. In the present embodiment, purification may be performed using water or a solvent having water as main component (e.g., solvent having a water content of 70 mass% or more). Further, after purification with water or the like, washing with alcohol (e.g., methanol) may be performed.

It is preferable that the resin produced by the method for producing a resin of the present embodiment be the resin of the present embodiment described above. Accordingly, it is preferable that the weight average molecular weight (Mw) and the number average molecular weight (Mn) of the resin produced by the method for producing a resin of the present embodiment be in the same ranges of the weight average molecular weight (Mw) and the number average molecular weight (Mn) of the resin of the present embodiment, respectively.

### <Use>

The resin of the present embodiment may be used as a curable resin composition. The curable resin composition may include one or two or more of the resins of the present embodiment, or may include a thermosetting compound other than the resin of the present embodiment. It is preferable that the thermosetting compound include at least one selected from compounds having a carbon-carbon unsaturated bond group other than the resin of the present embodiment and epoxy resins.

Further, the curable resin composition may contain one or two or more various additives. Examples of the additive include a curing initiator, a flame retardant, an ultraviolet absorber, an antioxidant, a photopolymerization initiator, a fluorescent brightener, a photosensitizer, a dye, a pigment, a thickener, a flow adjusting agent, a lubricant, a defoamer, a dispersant, a levelling agent, a brightener, and a polymerization inhibitor.

Examples of the curing initiator include di-3-methoxybutyl peroxydicarbonate, di-2-ethylhexyl peroxydicarbonate, bis(4-t-butylcyclohexyl) peroxydicarbonate, diisopropyl peroxydicarbonate, t-butyl peroxy isopropyl carbonate, dimyristyl peroxy carbonate, 1,1,3,3-tetramethyl butyl neodecanoate, α-cumyl peroxy neodecanoate, t-butyl peroxy neodecanoate, 1,1-bis(t-butylperoxy)cyclohexane, 2,2-bis(4,4-di-t-butylperoxy cyclohexyl)propane, 1,1-bis(t-butyl peroxy)cyclododecane, t-hexyl peroxy isopropyl monocarbonate, t-butyl peroxy-3,5,5-trimethyl hexanoate, t-butyl peroxy laurate, t-butyl peroxy-2-ethylhexane, 2,5-dimethyl 2,5-di(benzoylperoxy)hexane, t-butyl peroxy acetate, 2,2-bis(t-butylperoxy)butene, t-butyl peroxy benzoate, n-butyl-4,4-bis(t-peroxy)valerate, di-t-butyl peroxy isophthalate, dicumyl peroxide, α,α'-bis(t-butylperoxy-m-isopropyl)benzene, 2,5-dimethyl-2,5-di(t-butylperoxy)hexane, 1,3-bis(t-butylperoxydiisopropyl)benzene, t-butyl cumyl peroxide, di-t-butyl peroxide, p-menthane hydroperoxide, and 2,5-dimethyl-2,5-di(t-butylperoxy)hexyne-3.

In the case where the curable resin composition of the present embodiment contains a curing initiator, the amount thereof added relative to 100 parts by mass of the resin of the present embodiment is preferably 0.1 parts by mass or more, more preferably 0.5 parts by mass or more, still more preferably 1.0 part by mass or more, and preferably 10.0 parts by mass or less, more preferably 5.0 parts by mass or less, still more preferably 3.0 parts by mass or less, and even more preferably 2.0 parts by mass or less. The curable resin composition of the present embodiment may contain only one type of curing initiator, or may contain two or more types. In the case two or more types are contained, it is preferable that the total amount be in the range.

The cured product of the present embodiment is a cured product of the curable resin composition described above. Such a cured product is excellent in heat resistance and dielectric properties, being suitable for use as an insulating layer of a printed wiring board and a semiconductor packaging material.

### Examples

The present invention is more specifically described with reference to Examples as follows. The materials, the amount used, the proportion, the processing details, the processing steps, etc. shown in the following Examples may be appropriately changed without departing from the spirit of the present invention. Accordingly, the scope of the present invention is not limited to the following specific examples.

In the case where the measurement apparatuses used in Examples are not easily available due to discontinued production or the like, the measurement may be performed using an alternative apparatus having the same performance.

### <Measurement of number average molecular weight and weight average molecular weight>

The number average molecular weight and weight average molecular weight of a resin was determined by gel permeation chromatography (GPC).

As the analysis column, KF-801, KF-802, KF-803 and KF-804 manufactured by Showa Denko K.K. were connected for use, and a differential refractometer RID-20A manufactured by Shimadzu Corporation was used for detection. In 3 g of tetrahydrofuran as eluent, 10 mg of a resin as measurement target was dissolved. The injection volume into the column was set to 20 µL, and analysis was performed at an eluent flow rate of 1 mL/min and a column temperature of 40°C. A molecular weight calibration curve was made using a standard polystyrene PStQuick MP-N manufactured by Tosoh Corporation to estimate the molecular weight in terms of polystyrene.

### <Measurement of hydroxyl value of raw material resin>

The hydroxyl values of the raw material phenol modified xylene resin and the raw material phenol modified mesitylene resin were measured in accordance with JIS K0070-92-7.1.

### <Hydroxy group content of resin>

The phenolic hydroxy group content of the resin was calculated by proton nuclear magnetic resonance spectrum (¹H-NMR) analysis. Specifically, the peak area of proton of the p-tert-butyl group in the vicinity of 1.07 to 1.24 ppm was set to 9. The rate of decrease [%] of the peak area of proton of the phenolic hydroxy group in the vicinity of 4.2 to 5.4 ppm after the reaction compared with that before the reaction was regarded as modification rate [%] of the phenolic hydroxy group. The phenolic hydroxy group content was calculated by the following formula. (Hydroxy group content of resin [mmol/g]) = (Hydroxy group content of raw material resin [mmol/g])×(100-(Modification rate [%]))/100 Apparatus used: AVANCHE III500 (500 MHz) manufactured by Bruker

### <Methacrylic group content>

The methacrylic group content was calculated by proton nuclear magnetic resonance spectrum (¹H-NMR) analysis. Specifically, the peak area of proton of the p-tert-butyl group in the vicinity of 1.07 to 1.24 ppm was set to 9. The value of a peak area of proton of methacrylic group end in the vicinity of 5.4 to 5.8 ppm multiplied by 100 was regarded as methacrylation rate [%]. The methacrylic group content was calculated based on the resulting methacrylation rate, modification rate of phenolic hydroxy group, hydroxy group content of raw material resin, and molecular weight of modified substituent. Further, due to extinction of the peak of the phenolic hydroxy group of the phenol modified xylene resin or phenol modified mesitylene resin in the vicinity of 4.2 to 5.4 ppm after the reaction, the complete proceeding of the reaction was confirmed.
Apparatus used: AVANCHE III500 (500 MHz) manufactured by Bruker

### <Synthesis Example 1: Synthesis of p-tert-butylphenol (PTBP) modified xylene resin (1)>

A separable flask having a volume of 0.5 L equipped with a thermometer and a stirrer was charged with 200.0 g of xylene formaldehyde resin ("NIKANOL G" manufactured by Fudow Co., Ltd.), 253.2 g (1.69 mol) of p-tert-butylphenol (manufactured by DIC Corporation), and 0.14 g (0.74 mmol) of p-toluene sulfonate monohydrate (manufactured by FUJIFILM Wako Pure Chemical Corporation), and the mixture was heated to 90°C. Further, while dehydrated, the mixture was heated to 220°C over 5 hours to cause a reaction. Subsequently, 0.09 g (1.50 mmol) of urea (manufactured by Tokyo Chemical Industry Co., Ltd.) was added to suspend the reaction, so that 411.4 g of p-tert-butylphenol modified xylene resin was obtained. The number average molecular weight, the weight average molecular weight and the hydroxyl value of the resulting resin were measured in accordance with the conditions described above, and the results are shown in Table 1.

### <Synthesis Example 2: Synthesis of p-tert-butylphenol (PTBP) modified xylene resin (2)>

A separable flask having a volume of 0.5 L equipped with a thermometer and a stirrer was charged with 250.0 g of xylene formaldehyde resin ("NIKANOL H" manufactured by Fudow Co., Ltd.), 166.7 g (1.11 mol) of p-tert-butylphenol (manufactured by DIC Corporation), and 0.14 g (0.74 mmol) of p-toluene sulfonate monohydrate (manufactured by FUJIFILM Wako Pure Chemical Corporation), and the mixture was heated to 115°C. Further, while dehydrated, the mixture was heated to 180°C over 6 hours to cause a reaction. Subsequently, 0.14 g (2.33 mmol) of urea (manufactured by Tokyo Chemical Industry Co., Ltd.) was added to suspend the reaction, so that 375.2 g of p-tert-butylphenol modified xylene resin was obtained. The number average molecular weight, the weight average molecular weight and the hydroxyl value of the resulting resin were measured in accordance with the conditions described above, and the results are shown in Table 1.

### <Synthesis Example 3: Synthesis of mesitylene formaldehyde resin>

A separable flask possible to be drained from the bottom having a volume of 1.0 L equipped with a thermometer, a Dimroth condenser and a stirrer was charged with 621.6 g of 37 mass% formalin aqueous solution (7.66 mol of formaldehyde, manufactured by Mitsubishi Gas Chemical Company, Inc.). While stirring, 132.9 g (1.33 mol) of 98 mass% sulfuric acid (manufactured by FUJIFILM Wako Pure Chemical Corporation) and 459.7 g (3.82 mol) of mesitylene (manufactured by FUJIFILM Wako Pure Chemical Corporation) were added, and the mixture was refluxed at about 100°C under normal pressure for 4 hours to cause a reaction. Subsequently, 335 g of mesitylene (manufactured by FUJIFILM Wako Pure Chemical Corporation) was added as dilution solvent. After standing still, the lower aqueous phase was removed to leave the separated upper oil phase. Further, the oil phase was neutralized and washed with water. The unreacted raw materials and the like were distilled off under reduced pressure to obtain 578.6 g of mesitylene formaldehyde resin. The number average molecular weight and the weight average molecular weight of the resulting resin were measured in accordance with the conditions described above, and the results are shown in Table 1.

### <Synthesis Example 4: Synthesis of p-tert-butylphenol (PTBP) modified mesitylene resin (1)>

A separable flask having a volume of 0.5 L equipped with a thermometer and a stirrer was charged with 200.0 g of the mesitylene formaldehyde resin obtained in Synthesis Example 3,163.1 g (1.09 mol) of p-tert-butylphenol (manufactured by DIC Corporation), and 0.42 g (0.22 mmol) of p-toluene sulfonate monohydrate (manufactured by FUJIFILM Wako Pure Chemical Corporation), and the mixture was heated to 115°C. Further, while dehydrated, the mixture was heated to 200°C over 1 hour to cause a reaction. Subsequently, 0.05 g (0.83 mmol) of urea (manufactured by Tokyo Chemical Industry Co., Ltd.) was added to suspend the reaction, so that 346.1 g of p-tert-butylphenol modified mesitylene resin was obtained. The number average molecular weight, the weight average molecular weight and the hydroxyl value of the resulting resin were measured in accordance with the conditions described above, and the results are shown in Table 1.

### <Synthesis Example 5: Synthesis of p-tert-butylphenol (PTBP) modified mesitylene resin (2)>

A separable flask having a volume of 0.5 L equipped with a thermometer and a stirrer was charged with 100.3 g of the mesitylene formaldehyde resin obtained in Synthesis Example 3, 134.1 g (0.89 mol) of p-tert-butylphenol (manufactured by DIC Corporation), 9.32 g of 92% paraformaldehyde (manufactured by Mitsubishi Gas Chemical Company, Inc.), and 0.28 g (0.15 mmol) of p-toluene sulfonate monohydrate (manufactured by FUJIFILM Wako Pure Chemical Corporation), and the mixture was heated to 90°C. Further, while dehydrated, the mixture was heated to 220°C over 5 hours to cause a reaction. Subsequently, 0.04 g (0.67 mmol) of urea (manufactured by Tokyo Chemical Industry Co., Ltd.) was added to suspend the reaction, so that 251.6 g of p-tert-butylphenol modified mesitylene resin was obtained. The number average molecular weight, the weight average molecular weight and the hydroxyl value of the resulting resin were measured in accordance with the conditions described above, and the results are shown in Table 1.

**[Table 1]**

| | | Synthesis Example 1 | Synthesis Example 2 | Synthesis Example 3 | Synthesis Example 4 | Synthesis Example 5 |
|---|---|---|---|---|---|---|
| Type of raw material resin | | Xylene resin | Xylene resin | | Mesitylene resin | Mesitylene resin |
| Number average molecular weight | (Mn) | 1,922 | 1,264 | 486 | 1,651 | 1,648 |
| Weight average molecular weight | (Mw) | 8,126 | 7,109 | 686 | 4,975 | 3,745 |
| Hydroxyl value | [g/OH-mol] | 229 | 340 | | 315 | 252 |
| Hydroxy group content | [mmol/g] | 4.37 | 2.94 | | 3.17 | 3.97 |

### Example 1

A four-neck flask having a volume of 300 mL equipped with a stirrer, a thermometer and a reflux tube was charged with 22.0 g of p-tert-butylphenol modified xylene resin (96.2 mmol in terms of number of moles of hydroxy group) obtained in Synthesis Example 1, 190 g of tetrahydrofuran (manufactured by FUJIFILM Wako Pure Chemical Corporation), 66.5 g (481 mmol) of potassium carbonate (manufactured by FUJIFILM Wako Pure Chemical Corporation, average particle size: 150 µιη or less), and 11.2 g (72.7 mmol) of methacrylic anhydride (manufactured by Tokyo Chemical Industry Co., Ltd.), and the mixture was reacted at 70°C for 24 hours. Further, 18.1 g (177 mmol) of acetic anhydride (manufactured by FUJIFILM Wako Pure Chemical Corporation) was added to cause a reaction at 70°C for 24 hours. The reaction liquid was air-cooled and then filtered through a 0.45 µm filter. The resulting solution was dripped into purified water so as to be solidified. The solidified product was collected and washed with purified water and then with methanol. The resulting solid was washed with purified water and methanol again, and then dried under reduced pressure, so that 23.1 g of a target methacrylic compound was obtained. The number average molecular weight, the weight average molecular weight and the methacrylic group content of the resulting methacrylic compound were measured in accordance with the conditions described above, and the results are shown in Table 2.

A cured product was made in accordance with the following method. The dielectric properties, glass transition temperature and 5% weight reduction temperature of the resulting cured product were measured by the following method, and the results are shown in Table 2.

### <Preparation of cured product>

To the resulting methacrylic compound, 1.5 parts by mass of PERBUTYL (registered trademark) P (manufactured by NOF Corporation) was added to make a mixture, which was placed in a mold having a length of 100 mm and a width of 30 mm and hot-pressed in vacuum with a pressure of 1.92 MPa at 200°C for 1.5 hours, so that a cured product was prepared.

Apparatus used: 5-Step press VH2-1630 manufactured by Kitagawa Seiki Co., Ltd.

### <Measurement of dielectric properties of cured product>

The resulting cured product cut into a thickness of 1 mm, a width of 0.8 mm and a length of 100 mm was dried at 120°C for 1 hour and then subjected to measurement of the dielectric constant and dielectric loss tangent at 10 GHz by cavity resonator perturbation method.

Apparatus used: 8722ES Network Analyzer manufactured by Agilent Technologies Inc.

### <Measurement of glass transition temperature of cured product>

The resulting cured product cut into a width of 5 mm and a length of 40 mm was subj ected to dynamic viscoelasticity measurement, and the resulting peak temperature of elastic modulus was determined as the glass transition temperature of the cured product. The unit is in °C.
Apparatus used: DMA 7100 manufactured by Hitachi High-Tech Science Corporation
Heating rate: 5°C/min
Frequency: Sine wave at 10 Hz

### <Measurement of 5% weight reduction temperature of cured product]

The resulting cured product cut into about 10 mg was subjected to thermal gravimetric differential scanning calorimetry, and the temperature corresponding to a weight reduction of 5% was determined as the 5% weight reduction temperature of a cured product. The unit is in °C.
Apparatus used: STA 7200 manufactured by Hitachi High-Tech Science Corporation
Heating rate: 10°C/min

### Example 2

The reaction and purification were performed in the same manner as in Example 1 to obtain 21.6 g of a target methacrylic compound, except that the amount of charge of potassium carbonate (manufactured by FUJIFILM Wako Pure Chemical Corporation, average particle size: 150 µm or less) was changed to 66.4 g (480 mmol), the amount of charge of methacrylic anhydride (manufactured by Tokyo Chemical Industry Co., Ltd.) was changed to 12.4 g (80.5 mmol), and the amount of charge of acetic anhydride (manufactured by FUJIFILM Wako Pure Chemical Corporation) was changed to 14.9 g (146 mmol). The number average molecular weight, the weight average molecular weight and the methacrylation rate were measured in accordance with the conditions described above, and the results are shown in Table 2.

The dielectric properties, glass transition temperature and 5% weight reduction temperature of the cured product prepared in the same manner as in Example 1 were measured, and the results are shown in Table 2.

### Example 3

The reaction and purification were performed in the same manner as in Example 1 to obtain 23.8 g of a target methacrylic compound, except that the amount of p-tert-butylphenol modified xylene resin charged was changed to 22.1 g (96.3 mmol in terms of number of moles of hydroxy group), the amount of tetrahydrofuran (manufactured by FUJIFILM Wako Pure Chemical Corporation) charged was changed to 191 g, the amount of potassium carbonate (manufactured by FUJIFILM Wako Pure Chemical Corporation, average particle size: 150 µm or less) charged was changed to 66.6 g (482 mmol), the amount of methacrylic anhydride (manufactured by Tokyo Chemical Industry Co., Ltd.) charged was changed to 12.3 g (79.7 mmol), and the amount of acetic anhydride (manufactured by FUJIFILM Wako Pure Chemical Corporation) charged was changed to 15.3 g (150 mmol). The number average molecular weight, the weight average molecular weight and the methacrylation rate of the resulting methacrylic compound were measured in accordance with the conditions described above, and the results are shown in Table 2.

The dielectric properties, glass transition temperature and 5% weight reduction temperature of the cured product prepared in the same manner as in Example 1 were measured, and the results are shown in Table 2.

### Example 4

The reaction and purification were performed in the same manner as in Example 1 to obtain 23.9 g of a target methacrylic compound, except that the amount of potassium carbonate (manufactured by FUJIFILM Wako Pure Chemical Corporation, average particle size: 150 µm or less) charged was changed to 66.5 g (481 mmol), the amount of methacrylic anhydride (manufactured by Tokyo Chemical Industry Co., Ltd.) charged was changed to 13.7 g (88.8 mmol), and the amount of acetic anhydride (manufactured by FUJIFILM Wako Pure Chemical Corporation) charged was changed to 11.8 g (115 mmol). The number average molecular weight, the weight average molecular weight and the methacrylation rate of the resulting methacrylic compound were measured in accordance with the conditions described above, and the results are shown in Table 2.

The dielectric properties, glass transition temperature and 5% weight reduction temperature of the cured product prepared in the same manner as in Example 1 were measured, and the results are shown in Table 2.

### Example 5

The reaction and purification were performed in the same manner as in Example 1 to obtain 20.7 g of a target methacrylic compound, except that 22.6 g (66.4 mmol in terms of number of moles of hydroxy group) of p-tert-butylphenol modified xylene resin obtained in Synthesis Example 2 was used to replace p-tert-butylphenol modified xylene resin obtained in Synthesis Example 1, the amount of tetrahydrofuran (manufactured by FUJIFILM Wako Pure Chemical Corporation) charged was changed to 200 g, the amount of potassium carbonate (manufactured by FUJIFILM Wako Pure Chemical Corporation, average particle size: 150 µm or less) charged was changed to 45.9 g (332 mmol), the amount of methacrylic anhydride (manufactured by Tokyo Chemical Industry Co., Ltd.) charged was changed to 12.6 g (81.7 mmol), and the amount of acetic anhydride (manufactured by FUJIFILM Wako Pure Chemical Corporation) charged was changed to 8.1 g (79.5 mmol). The number average molecular weight, the weight average molecular weight and the methacrylation rate of the resulting methacrylic compound were measured in accordance with the conditions described above, and the results are shown in Table 2.

The dielectric properties and 5% weight reduction temperature of the cured product prepared in the same manner as in Example 1 were measured, and the results are shown in Table 2.

### Example 6

The reaction and purification were performed in the same manner as in Example 1 to obtain 21.4 g of a target methacrylic compound, except that the amount of p-tert-butylphenol modified xylene resin charged was changed to 17.1 g (74.5 mmol in terms of number of moles of hydroxy group), the amount of tetrahydrofuran (manufactured by FUJIFILM Wako Pure Chemical Corporation) charged was changed to 223 g, the amount of potassium carbonate (manufactured by FUJIFILM Wako Pure Chemical Corporation, average particle size: 150 µm or less) charged was changed to 60.4 g (437 mmol), the amount of methacrylic anhydride (manufactured by Tokyo Chemical Industry Co., Ltd.) charged was changed to 10.4 g (67.3 mmol), and acetic anhydride (manufactured by FUJIFILM Wako Pure Chemical Corporation) was replaced with 26.7 g (118 mmol) of benzoic anhydride (manufactured by Tokyo Chemical Industry Co., Ltd.). The number average molecular weight, the weight average molecular weight and the methacrylation rate of the resulting methacrylic compound were measured in accordance with the conditions described above, and the results are shown in Table 3.

The dielectric properties, glass transition temperature and 5% weight reduction temperature of the cured product prepared in the same manner as in Example 1 were measured, and the results are shown in Table 3.

### Example 7

The reaction and purification were performed in the same manner as in Example 1 to obtain 24.4 g of a target methacrylic compound, except that 22.2 g (70.5 mmol in terms of number of moles of hydroxy group) of p-tert-butylphenol modified xylene resin obtained in Synthesis Example 4 was used to replace p-tert-butylphenol modified xylene resin obtained in Synthesis Example 1, the amount of tetrahydrofuran (manufactured by FUJIFILM Wako Pure Chemical Corporation) charged was changed to 200 g, the amount of potassium carbonate (manufactured by FUJIFILM Wako Pure Chemical Corporation, average particle size: 150 µm or less) charged was changed to 38.8 g (281 mmol), the amount of methacrylic anhydride (manufactured by Tokyo Chemical Industry Co., Ltd.) charged was changed to 13.3 g (86.4 mmol), and the amount of acetic anhydride (manufactured by FUJIFILM Wako Pure Chemical Corporation) charged was changed to 5.77 g (56.5 mmol). The number average molecular weight, the weight average molecular weight and the methacrylation rate of the resulting methacrylic compound were measured in accordance with the conditions described above, and the results are shown in Table 3.

The dielectric properties, glass transition temperature and 5% weight reduction temperature of the cured product prepared in the same manner as in Example 1 were measured, and the results are shown in Table 3.

### Example 8

The reaction and purification were performed in the same manner as in Example 1 to obtain 16.6 g of a target methacrylic compound, except that 15.0 g (59.8 mmol in terms of number of moles of hydroxy group) of p-tert-butylphenol modified mesitylene resin obtained in Synthesis Example 5 was used to replace p-tert-butylphenol modified xylene resin obtained in Synthesis Example 1, the amount of tetrahydrofuran (manufactured by FUJIFILM Wako Pure Chemical Corporation) charged was changed to 136 g, the amount of potassium carbonate (manufactured by FUJIFILM Wako Pure Chemical Corporation, average particle size: 150 µm or less) charged was changed to 33.4 g (242 mmol), the amount of methacrylic anhydride (manufactured by Tokyo Chemical Industry Co., Ltd.) charged was changed to 11.3 g (73.3 mmol), and the amount of acetic anhydride (manufactured by FUJIFILM Wako Pure Chemical Corporation) charged was changed to 4.88 g (47.8 mmol). The number average molecular weight, the weight average molecular weight and the methacrylation rate of the resulting methacrylic compound were measured in accordance with the conditions described above, and the results are shown in Table 3.

The dielectric properties, glass transition temperature and 5% weight reduction temperature of the cured product prepared in the same manner as in Example 1 were measured, and the results are shown in Table 3.

### Reference Example 1

A cured product was prepared in the same manner as in Example 1 from a mixture of a typical polyphenylene ether having methacrylic groups at both ends SA 9000 (manufactured by SABIC) with 1.5 parts by mass of PERBUTYI, (registered trademark) P (manufactured by NOF Corporation). The dielectric properties, glass transition temperature and 5% weight reduction temperature were measured with the resulting cured product, and the results are shown in Table 3.

**[Table 2]**

| | | Example 1 | Example 2 | Example 3 | Example 4 | Example 5 |
|---|---|---|---|---|---|---|
| Raw material resin | | Synthesis Example 1 | Synthesis Example 1 | Synthesis Example 1 | Synthesis Example 1 | Synthesis Example 2 |
| Number average molecular weight | (Mn) | 2,590 | 2,883 | 3,005 | 4,568 | 1,618 |
| Weight average molecular weight | (Mw) | 9,925 | 10,164 | 10,475 | 13,120 | 8,031 |
| Hydroxy group content after modification | [mmol/g] | 0.095 | - | - | - | - |
| Non-modifying ratio | [%] | 2.17 | 0 | 0 | 0 | 0 |
| Methacrylic group content | [mmol/g] | 2.48 | 2.71 | 2.74 | 2.80 | 2.15 |
| Dielectric constant | (10 GHz) | 2.42 | 2.39 | 2.41 | 2.40 | 2.39 |
| Dielectric loss tangent | (10 GHz) | 0.0046 | 0.0044 | 0.0044 | 0.0040 | 0.0044 |
| Glass transition temperature | [°C] | 167 | 173 | 179 | 193 | |
| 5% Weight reduction temperature | [°C] | 357 | 351 | 375 | 378 | 379 |

**[Table 3]**

| | | Example 6 | Example 7 | Example 8 | Reference Example 1 |
|---|---|---|---|---|---|
| Raw material resin | | Synthesis Example 1 | Synthesis Example 4 | Synthesis Example 5 | |
| Number average molecular weight | (Mn) | 3,374 | 2,086 | 2,037 | |
| Weight average molecular weight | (Mw) | 11,025 | 6,084 | 5,203 | - |
| Hydroxy group content after modification | [mmol/g] | - | - | - | |
| Non-modifying ratio | [%] | 0 | 0 | 0 | |
| Methacrylic group content | [mmol/g] | 1.73 | 2.19 | 2.84 | 0.77 |
| Dielectric constant | (10 GHz) | 2.43 | 2.39 | 2.37 | 2.43 |
| Dielectric loss tangent | (10 GHz) | 0.0048 | 0.0046 | 0.0045 | 0.0049 |
| Glass transition temperature | [°C] | 193 | 189 | 182 | 157 |
| 5% Weight reduction temperature | [°C] | 378 | 345 | 371 | 307 |

## Claims

1. A resin having constituent units described in Group (1): 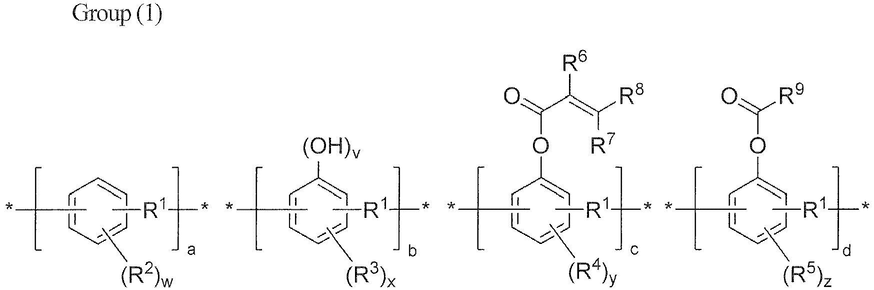 wherein R¹s each independently represent a methylene group, a methyleneoxy group, a methylene oxymethylene group or an oxymethylene group; R² represents an alkyl group having 1 to 3 carbon atoms; R³, R⁴ and R⁵ each independently represent a halogen atom, an alkyl group having 1 to 10 carbon atoms, a halogenated alkyl group having 1 to 10 carbon atoms, a hydroxyalkyl group having 1 to 10 carbon atoms, or an aryl group having 6 to 12 carbon atoms; R⁶, R⁷ and R⁸ each independently represent a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms; R⁹ represents a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms; v represents 0 or 1, w represents a number of 1 to 3, and x, y and z each independently represent a number of 0 to 3; a, b, c and d each independently represent a molar ratio of the constituent unit, wherein a is a number of 1 or more, b is a number of 0 or more, c is a number of 1 or more, and d is a number of 0 or more; R¹s may be bonded to each other to form a crosslinked structure; and * represents a position of bonding to another constituent unit or an end group.

2. The resin according to claim 1, wherein in Group (1), R⁶ is a methyl group, and R⁷ and R⁸ are hydrogen atoms.

3. The resin according to claim 1 or 2, wherein in Group (1), R³, R⁴ and R⁵ are each independently an alkyl group having 1 to 10 carbon atoms.

4. The resin according to claim 1 or 2, wherein in Group (1), R³, R⁴ and R⁵ are each independently an alkyl group having 1 to 5 carbon atoms.

5. The resin according to any one of claims 1 to 4, having a phenolic hydroxy group content of 0.5 mmol/g or less.

6. The resin according to any one of claims 1 to 5, having a content of a group represented by the following in Group (1) of 1.0 mmol/g or more: 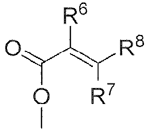 wherein R⁶ to R⁸ are as defined for R⁶ to R⁸ in Group (1).

7. The resin according to any one of claims 1 to 6, wherein the constituent units described in Group (1) comprise at least one selected from the group consisting of constituent units described in Group (1-1), constituent units described in Group (1-2), constituent units described in Group (1-3), and constituent units described in Group (1-4): 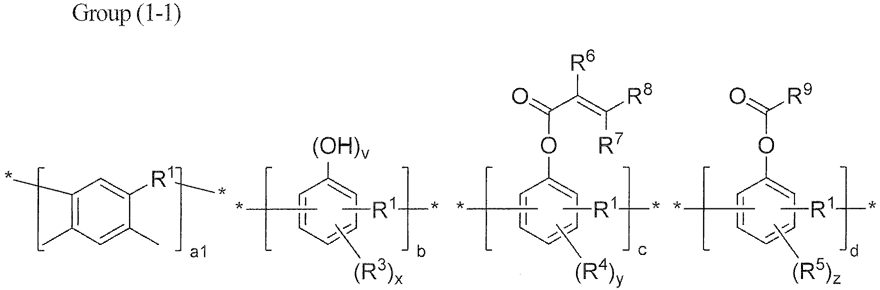 wherein R¹, R³, R⁴, R⁵, R⁶, R⁷, R⁸, R⁹, v, x, y, z, a1, b, c and d are as defined for R¹, R³, R⁴, R⁵, R⁶, R⁷, R⁸, R⁹, v, x, y, z, a, b, c and d in Group (1), respectively, and * represents a position of bonding to another constituent unit or an end group; 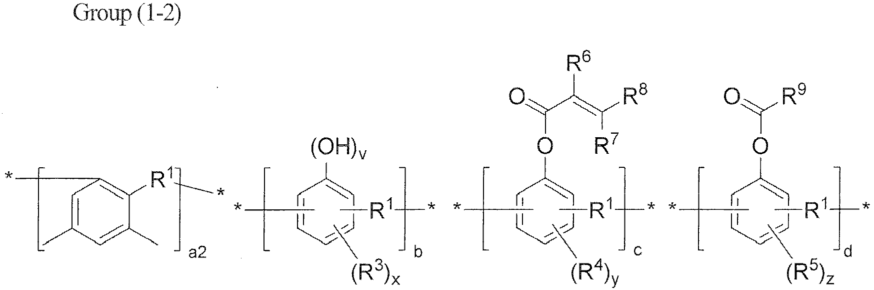 wherein R¹, R³, R⁴, R⁵, R⁶, R⁷, R⁸, R⁹, v, x, y, z, a2, b, c and d are as defined for R¹, R³, R⁴, R⁵, R⁶, R⁷, R⁸, R⁹, v, x, y, z, a, b, c and d in Group (1), respectively, and * represents a position of bonding to another constituent unit or an end group; 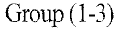 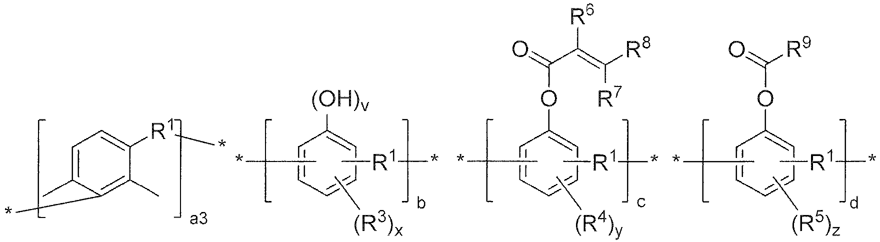 wherein R¹, R³, R⁴, R⁵, R⁶, R⁷, R⁸, R⁹, v, x, y, z, a3, b, c and d are as defined for R¹, R³, R⁴, R⁵, R⁶, R⁷, R⁸, R⁹, v, x, y, z, a, b, c and d in Group (1), respectively, and * represents a position of bonding to another constituent unit or an end group; 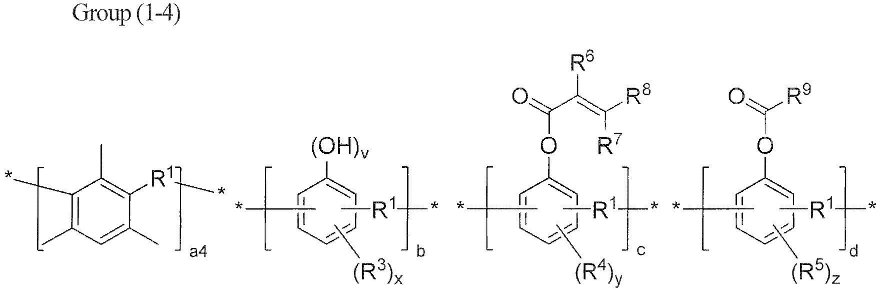 wherein R¹, R³, R⁴, R⁵, R⁶, R⁷, R⁸, R⁹, v, x, y, z, a4, b, c and d are as defined for R¹, R³, R⁴, R⁵, R⁶, R⁷, R⁸, R⁹, v, x, y, z, a, b, c and d in Group (1), respectively, and * represents a position of bonding to another constituent unit or an end group.

8. The resin according to claim 7, wherein the constituent units described in Group (1) comprise constituent units described in Group (1-1) or Group (1-4).

9. The resin according to any one of claims 1 to 8, having a number average molecular weight (Mn) of 500 to 6000, and a weight average molecular weight (Mw) of 500 to 15000.

10. The resin according to any one of claims 1 to 9, wherein an end group of the resin is selected from the group consisting of a hydrogen atom, a hydroxy group and a hydroxymethyl group.

11. A resin comprising a reaction product at least a compound represented by Formula (2) and a raw material resin having constituent units described in Group (4): 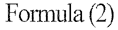 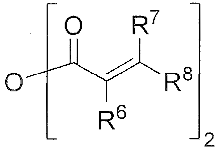 wherein R⁶, R⁷ and R⁸ each independently represent a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms; 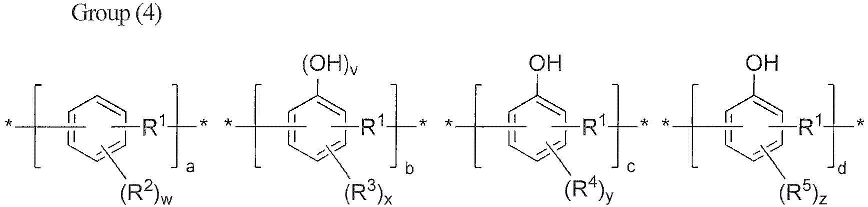 wherein R¹s each independently represent a methylene group, a methyleneoxy group, a methylene oxymethylene group or an oxymethylene group; R² represents an alkyl group having 1 to 3 carbon atoms; R³, R⁴ and R⁵ each independently represent a halogen atom, an alkyl group having 1 to 10 carbon atoms, a halogenated alkyl group having 1 to 10 carbon atoms, a hydroxyalkyl group having 1 to 10 carbon atoms, or an aryl group having 6 to 12 carbon atoms; v represents 0 or 1, w represents a number of 1 to 3, and x, y and z each independently represent a number of 0 to 3; a, b, c and d each independently represent a molar ratio of the constituent unit, wherein a is a number of 1 or more, b is a number of 0 or more, c is a number of 1 or more, and d is a number of 0 or more; R¹s may be bonded to each other to form a crosslinked structure; and * represents a position of bonding to another constituent unit or an end group.

12. A method for producing a resin, comprising reacting at least a compound represented by Formula (2) and a raw material resin having constituent units described in Group (4) in the presence of a basic compound: 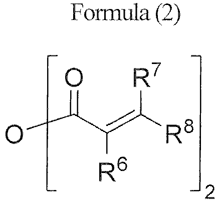 wherein R⁶, R⁷ and R⁸ each independently represent a hydrogen atom, a halogen atom, an alkyl group having 1 to 10 carbon atoms, a halogenated alkyl group having 1 to 10 carbon atoms, a hydroxy group, a hydroxyalkyl group having 1 to 10 carbon atoms, or an aryl group having 6 to 12 carbon atoms; 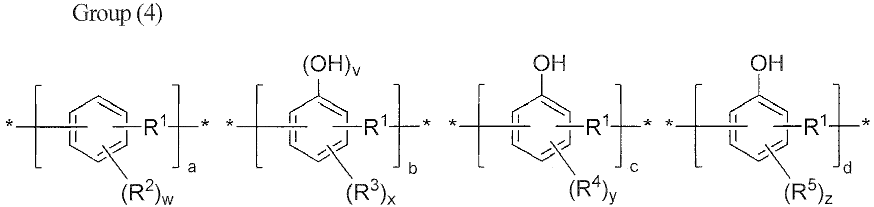 wherein R¹s each independently represent a methylene group, a methyleneoxy group, a methylene oxymethylene group or an oxymethylene group; R² represents an alkyl group having 1 to 3 carbon atoms; R³, R⁴ and R⁵ each independently represent a halogen atom, an alkyl group having 1 to 10 carbon atoms, a halogenated alkyl group having 1 to 10 carbon atoms, a hydroxyalkyl group having 1 to 10 carbon atoms, or an aryl group having 6 to 12 carbon atoms; v represents 0 or 1, w represents a number of 1 to 3, and x, y and z each independently represent a number of 0 to 3; a, b, c and d each independently represent a molar ratio of the constituent unit, wherein a is a number of 1 or more, b is a number of 0 or more, c is a number of 1 or more, and d is a number of 0 or more; R¹s may be bonded to each other to form a crosslinked structure; and * represents a position of bonding to another constituent unit or an end group.

13. The method for producing a resin according to claim 12, wherein in Formula (2), R⁶ is a methyl group, and R⁷ and R⁸ are hydrogen atoms.

14. The method for producing a resin according to claim 12 or 13, wherein in Group (4), R³, R⁴ and R⁵ are each independently an alkyl group having 1 to 10 carbon atoms.

15. The method for producing a resin according to claim 12 or 13, wherein in Group (4), R³, R⁴ and R⁵ are each independently an alkyl group having 1 to 5 carbon atoms.

16. The method for producing a resin according to any one of claims 12 to 15, wherein the raw material resin has a hydroxyl value of 100 to 600 g/mol.

17. The method for producing a resin according to any one of claims 12 to 16, wherein the constituent units described in Group (4) comprise at least one selected from the group consisting of constituent units described in Group (4-1), constituent units described in Group (4-2), constituent units described in Group (4-3), and constituent units described in Group (4-4): 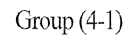 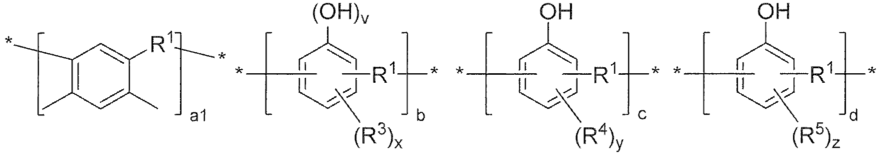 wherein R¹, R³, R⁴, R⁵, v, x, y, z, a1, b, c and d are as defined for R¹, R³, R⁴, R⁵, v, x, y, z, a, b, c and d in Group (4), respectively, and * represents a position of bonding to another constituent unit or an end group; 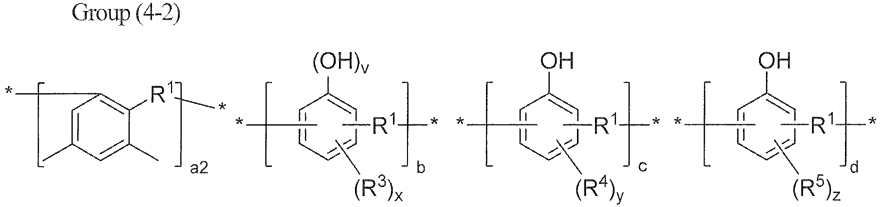 wherein R¹, R³, R⁴, R⁵, v, x, y, z, a2, b, c and d are as defined for R¹, R³, R⁴, R⁵, v, x, y, z, a, b, c and d in Group (4), respectively, and * represents a position of bonding to another constituent unit or an end group; 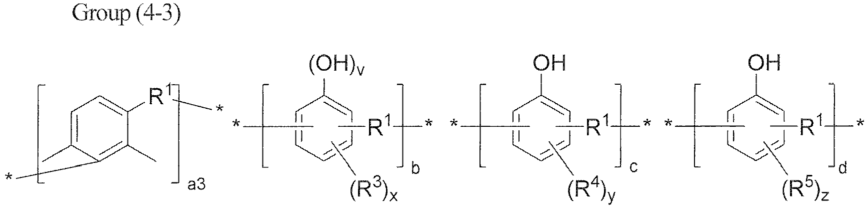 wherein R¹, R³, R⁴, R⁵, v, x, y, z, a3, b, c and d are as defined for R¹, R³, R⁴, R⁵, v, x, y, z, a, b, c and d in Group (4), respectively, and * represents a position of bonding to another constituent unit or an end group; 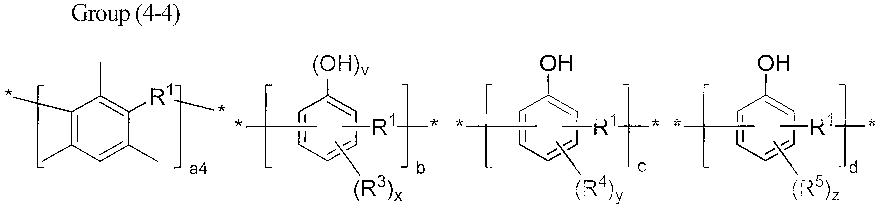 wherein R¹, R³, R⁴, R⁵, v, x, y, z, a4, b, c and d are as defined for R¹, R³, R⁴, R⁵, v, x, y, z, a, b, c and d in Group (4), respectively, and * represents a position of bonding to another constituent unit or an end group.

18. The method for producing a resin according to claim 17, wherein the constituent units described in Group (4) comprise constituent units described in Group (4-1), or constituent units described in Group (4-4).

19. The method for producing a resin according to any one of claims 12 to 18, wherein the raw material resin having the constituent units described in Group (4) has a number average molecular weight (Mn) of 400 to 4000, and a weight average molecular weight (Mw) of 400 to 16000.

20. The method for producing a resin according to any one of claims 12 to 19, wherein an end group of the raw material resin having the constituent units described in Group (4) is selected from the group consisting of a hydrogen atom, a hydroxy group and a hydroxymethyl group.

21. The method for producing a resin according to any one of claims 12 to 20, wherein the basic compound comprises at least one selected from the group consisting of potassium carbonate, rubidium carbonate and cesium carbonate.

22. The method for producing a resin according to any one of claims 12 to 21, wherein the resin to be produced is a resin according to any one of claims 1 to 11.

23. A curable resin composition comprising a resin according to any one of claims 1 to 11.

24. The curable resin composition according to claim 23, further comprising a thermosetting compound other than a resin according to any one of claims 1 to 11.

25. The curable resin composition according to claim 23 or 24, wherein the thermosetting compound comprises at least one selected from the group consisting of a compound having a carbon-carbon unsaturated bond group other than a resin according to any one of claims 1 to 11, and an epoxy resin.

26. A cured product of a curable resin composition according to any one of claims 23 to 25.
